# EUROPEAN PATENT SPECIFICATION

(11) **EP 1 349 411 B1**
(45) Date of publication and mention of the grant of the patent: **15.01.2014**
(21) Application number: 03100366.8
(22) Date of filing: 18.02.2003
(51) Int. Cl.: H04W 4/02

(54) **Positioning of mobile station**
Ortsbestimmung einer Mobilstation
Positionnement d'une station mobile

(30) Priority: 22.02.2002 FI 20020354
(43) Date of publication of application: 01.10.2003
(73) Proprietor: TeliaSonera AB, 10663 Stockholm (SE)
(72) Inventor: Karhu, Pekka, 00330 Helsinki (FI); Lautiainen, Jarko, 00940, Helsinki (FI); Hakala, Ari, 00180, Helsinki (FI); Taavitsainen, Jari, 20740, Turku (FI); Lammi, Tapio, 53850, Lappeenranta (FI)
(74) Representative: Kolster Oy Ab

(56) References cited:
- EP-A- 1 139 688
- WO-A-01/80586
- WO-A-02/35752
- WO-A-98/51104
- US-A- 6 081 711
- 3GPP: "3RD GENERATION PARTNERSHIP PROJECT;TECHNICAL SPECIFICATION GROUP CORE NETWORK; OPEN SERVICE ARCHITECTURE APPLICATION PROGRAMMING INTERFACE - PART 2 (RELEASE 1999)" 3G TR 29.998 V3.0.0, XX, XX, June 2000 (2000-06), pages 1-93, XP002950900
- ETSI: "DIGITAL CELLULAR TELECOMMUNICATIONS SYSTEM (PHASE 2+);LOCATION SERVICES (LCS); (FUNCTIONAL DESCRIPTION) - STAGE 2 (GSM 03.71 VERSION 7.0.0 RELEASE 1998)" EUROPEAN TELECOMMUNICATION STANDARD, XX, XX, August 1999 (1999-08), pages 1-59, XP002132874

## Description

### FIELD OF THE INVENTION

The invention relates to positioning of a mobile station in a mobile communication system with an accuracy of a cell, irrespective of whether the mobile station resides within the area of its home network or within the area of a visited network. A mobile communication network refers generally to any telecommunication network enabling wireless communication when users move within the service area of the system.

### BACKGROUND OF THE INVENTION

A mobile station can be located using several different methods. Positioning typically utilizes measurement information produced by a mobile station registered in a mobile communication system e.g. in order to implement cell re-selection and, during an active radio connection, in order to e.g. monitor call quality. Such measurement information includes e.g. the cell identity (Cell ID, CID) of a serving cell, a Location Area Code (LAC), the radio channel used and the strength thereof, timing advance as well as the channels of surrounding radio cells and the strengths thereof.

In prior art positioning methods utilizing measurement information, such as Pointer by Sonera, the network node carrying out positioning requests routing information on the mobile station, i.e. the address of the mobile services switching centre serving the mobile station, from the home location register containing subscriber information on the mobile station. After receiving it, the network node carrying out positioning checks whether or not the mobile services switching centre resides in the home network, i.e. in the same network as the network carrying out positioning. If the mobile station resides in the home network, the network node carrying out positioning finds out its location with an accuracy of a cell. Pointer, for example, utilizes an ATI (Any Time Interrogation) function of MAPv3 (Mobile Application Part) by means of which, in a GSM (Global System for Mobile communication) system, the location of a mobile station having an active radio connection can be found out with an accuracy of a cell. If the mobile services switching centre does not reside in the home network, the network node carrying out positioning does not find out the location of the mobile station at all. Neither is the network node carrying out positioning capable of positioning mobile stations other than those of its own operator because these are the only ones that have the same home network as the network node carrying out positioning.

A problem with the prior art solutions is thus that when a mobile station roams in another network (visited network), the mobile station does not become located; therefore, the mobile station cannot be provided with location-specific value added services, such as local weather forecasts, information about local entertainment, or positioning of a mobile user in the event of emergency.

The location of a mobile station may also be determined in ways other than those based on measurement information in a telecommunication network, e.g. by means of a GPS (Global Positioning System) receiver integrated in a mobile station during satellite positioning. Also in these positioning methods, only a mobile station residing in a home network is located. Furthermore, in these positioning methods, such as in satellite positioning GPS, a mobile station should typically comprise certain properties, such as a GPS receiver.

3GPP standard TR 29.998 V3.0.0, June 2000, pages 1-93, discloses network user location call flows which provide location information, based on network-related information, if the network is able to support the corresponding capability.

WO 98/51104 discloses how a position of a roaming mobile station is obtained over a communication channel that is used for communicating roaming data between mobile stations.

EP 1 139 688 discloses an accuracy limit indicating a maximum accuracy with which limit it is ensured that location data of a mobile entity is at most the indicated accuracy, when forwarded to the requesting entity.

### BRIEF DESCRIPTION OF THE INVENTION

An object of the invention is achieved by a method, a system and a network node which are characterized by what has been disclosed in the independent claims. Preferred embodiments of the invention are disclosed in the dependent claims.

An aspect of invention is detecting the problem and solving it such that irrespective of whether a mobile station resides within the area of a home network or within the area of a visited network, a positioning part of a mobile communication system requests location information on the mobile station from the home location register of the mobile station and locates the mobile station on the basis of this information. Thus, location information is obtained globally also from those networks that have no positioning part of their own.

In a preferred embodiment of the invention, one positioning part operating in accordance with the invention is integrated into the system. An advantage of this embodiment is low implementation costs and the possibility of selling a positioning service to other operators.

In a preferred embodiment of the invention, location information is requested utilizing the ATI function. A further advantage of this embodiment is that the positioning can be implemented utilizing standard messages; thus, it is not a manufacturer-specific property, so a standard terminal device can be used.

In a preferred embodiment of the invention, a service platform requesting location information comprises conditions enabling allowed location information dependent on the location of the terminal device to be filtered to the application using the information. An advantage of this embodiment is that the service platform ensures that the information to be delivered follows local regulations and does not have to be separately defined for each application.

### BRIEF DESCRIPTION OF THE DRAWINGS

The invention is now described in closer detail in connection with the preferred embodiments and with reference to the accompanying drawings, in which

Figure 1 illustrates network elements of a system in accordance with a first preferred embodiment of the invention;

Figures 2, 3, 4 and 5 are flow diagrams illustrating the operation of a positioning part in accordance with the first preferred embodiment of the invention; and

Figure 6 illustrates the operation of a service platform in accordance with the first preferred embodiment of the invention.

### DETAILED DESCRIPTION OF THE INVENTION

The present invention can be applied in connection with any telecommunication system wherein a terminal device is able to move in the service area of the system such that it simultaneously transmits information to the system, on the basis of which information the location of the terminal can be determined with sufficient accuracy. Such systems include e.g. "third generation" mobile communication systems, such as a Universal Mobile Telecommunications System (UMTS), the pan-European GSM system and corresponding mobile telecommunication systems, such as GSM 1800 and PCS (Personal Communication System), as well as systems based on the above-mentioned ones, such as GSM 2+ systems. GSM 2+ phase services include e.g. GPRS (General Packet Radio Service) and CAMEL (Customised Applications for Mobile network Enhanced Logic). In the following, the invention will be described using the GSM system implementing a CAMEL service and the ATI function as an exemplary system, without being restricted thereto. Specifications for telecommunication systems develop rapidly. Such development may require additional amendments to the invention. Therefore, all words and expressions should be interpreted in a broad sense; they are only intended to describe, not to restrict, the invention. As far as the invention is concerned, the important point is the function, not the network node where the function is executed.

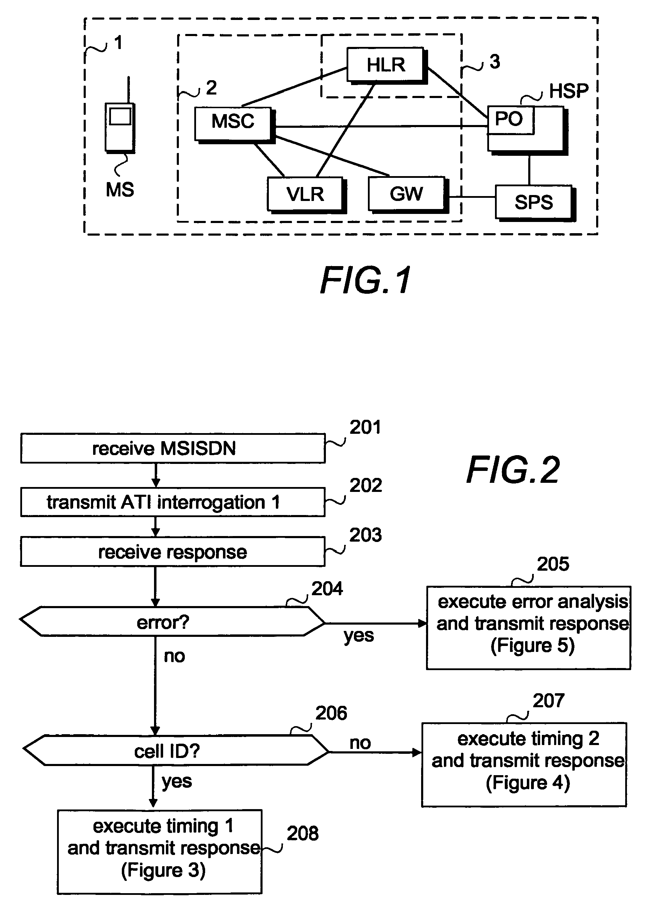

Figure 1 shows a simplified network architecture in accordance with a preferred embodiment of the invention, disclosing only some of the elements of a system 1. The network nodes shown in Figure 1 are logical units whose implementation may differ from the shown one. It is obvious for one skilled in the art that the system may also comprise other functions and structures that need not be described in closer detail herein. The system description is by no means binding, but suggestive.

In networks 2, 3 according to the GSM system, mobile stations MS are, through a radio connection and a base station subsystem (not shown in Figure 1), connected to a mobile services switching centre MSC serving a particular mobile station. A task of the mobile services switching centre is to switch calls which involve at least one mobile station MS. Some mobile services switching centres are connected to other telecommunication networks, such as to a Public Switched Telephone Network (PSTN), and they contain switching functions for connecting calls to and from these networks. These mobile services switching centres are called transit switching centres.

A mobile station MS herein generally refers to an entity consisting of a mobile subscriber and the actual terminal. The GSM system uses e.g. an International Mobile Subscriber Identity IMSI and a Mobile Subscriber International ISDN Number MSISDN in order to identify a mobile station.

The GSM system comprises two types of subscriber databases. Subscriber information is stored in a Home Location Register HLR for each subscriber in a particular network such that the subscriber information is combined with the subscriber identity IMSI. Some of the subscriber information is stored permanently and some semipermanently. Subscriber information includes e.g. routing information, i.e. the address of the mobile services switching centre serving a particular subscriber. A Visitor Location Register VLR is a register of another type. When a mobile station MS has registered in a particular network and is capable of initiating or receiving a call, a vast majority of the subscriber information in the home location register HLR concerning the mobile station MS is downloaded (copied) into the visitor location register of the mobile services switching centre in the area of which the mobile station MS resides. The home location register HLR of the mobile station may be located in a different network than the mobile services switching centre MSC and the visitor location register VLR serving the mobile station. Usually, the visitor location register VLR and the mobile services switching centre MSC are integrated into one network element having the same address and number as the one identifying the network node.

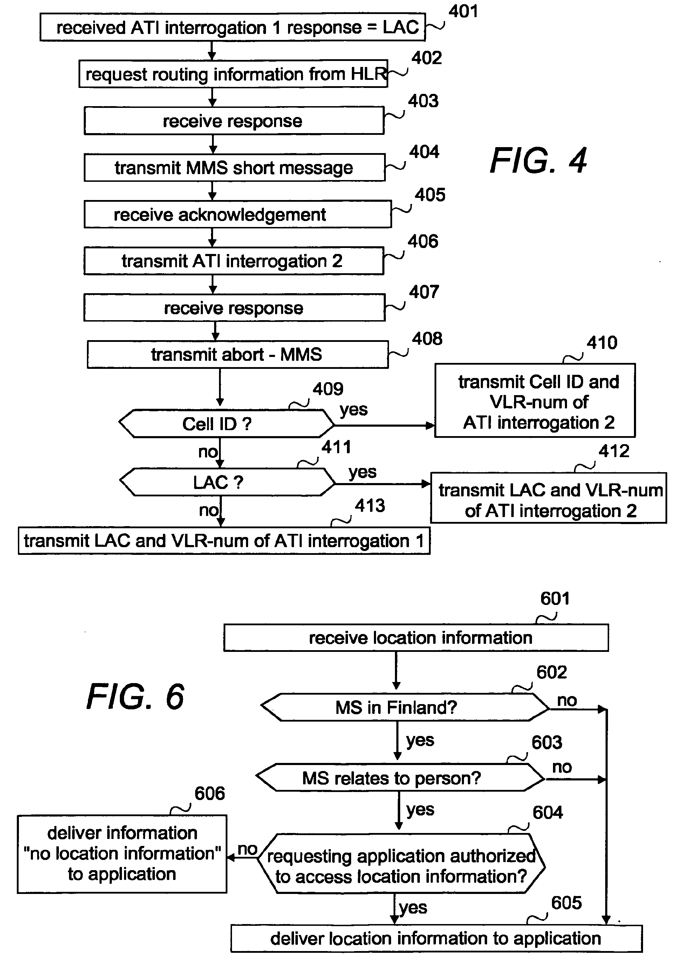

A service platform SPS providing a positioning service, e.g. a standard positioning service, is not an element of the actual GSM system, and it is typically connected to the GSM system through a Gateway Node GW, e.g. a short message gateway node or a WAP (Wireless Application Protocol) gateway node. A gateway node GW is not necessarily a separate network node but it can be integrated either into a server or into a transit switching centre. The service platform SPS may be connected to any network, each service provider providing a positioning service may have a service platform of its own, some of the service providers may share a common service platform, or a service platform may be a centralized service platform through which a single service can be provided globally. In a first preferred embodiment of the invention, the service platform comprises a set of conditions by means of which it filters received location information. The filtering and the set of conditions will be described in closer detail in connection with Figure 6. In another embodiment of the invention, the service platform may be e.g. a prior art service platform. In the first preferred embodiment of the invention, a positioning part PO resides in an HLR signalling proxy HSP of the home location register. The PO is an application which is responsible for generating signalling messages and timing thereof such that a mobile station can be located with sufficient accuracy. In the first preferred embodiment of the invention, the PO comprises short message functions e.g. for positioning of a mobile station, and service control functions. A short message function typically comprises generating a mobile terminated short message and transmitting it directly to the mobile station through a mobile services switching centre. The PO may also support number portability and billing. One positioning part may serve several service platforms and, in a preferred embodiment of the invention, one positioning part serves the whole system. Similarly, one service platform may request a positioning service from several different positioning parts.

In some preferred embodiments of the invention, the system comprises a positioning database (not shown in Figure 1) to enable a cell identity to be converted into geographical coordinates. The positioning database may reside in the positioning part, in the service platform or it may constitute a separate database of its own, or it may be a part of a database. The positioning database may also be a distributed database. In embodiments which comprise a positioning database, depending on the embodiment, either the positioning part or the service platform, or both, a separate network node or a system of a third party comprises means for using the positioning database. A separate positioning database may be located in a different network than the network node using its information. As far as the invention is concerned, it is irrelevant where the positioning database resides and by whom and in which manner the information therein is utilized.

The above-disclosed network nodes may be located in a single network or in several different networks. The mobile station MS, the mobile services switching centre MSC and the visitor location register VLR naturally reside in the same network, which can be called e.g. the location network of the mobile station. The location network of the mobile station is either the home network 3 or the visited network 2. A home network is a network wherein the home location register HLR of a mobile station resides. In the example of Figure 1, the mobile station resides in the visited network 2. The positioning part HSP and the service platform SPS may both be located e.g. in the home location register of the mobile station. Another example is that the service platform SPS resides in the location network of a mobile station and the positioning part resides in the network of an operator which sells a positioning service to other operators. A third example is that also the service platform resides in the network of its own operator, the network being none of the above-mentioned networks. The invention thus enables positioning to be implemented using no more than only one positioning part whose location is irrelevant such that all mobile stations operating in the system can be located within the coverage area of the whole system. It will suffice that the positioning part has a connection to the home network of the mobile station to be located.

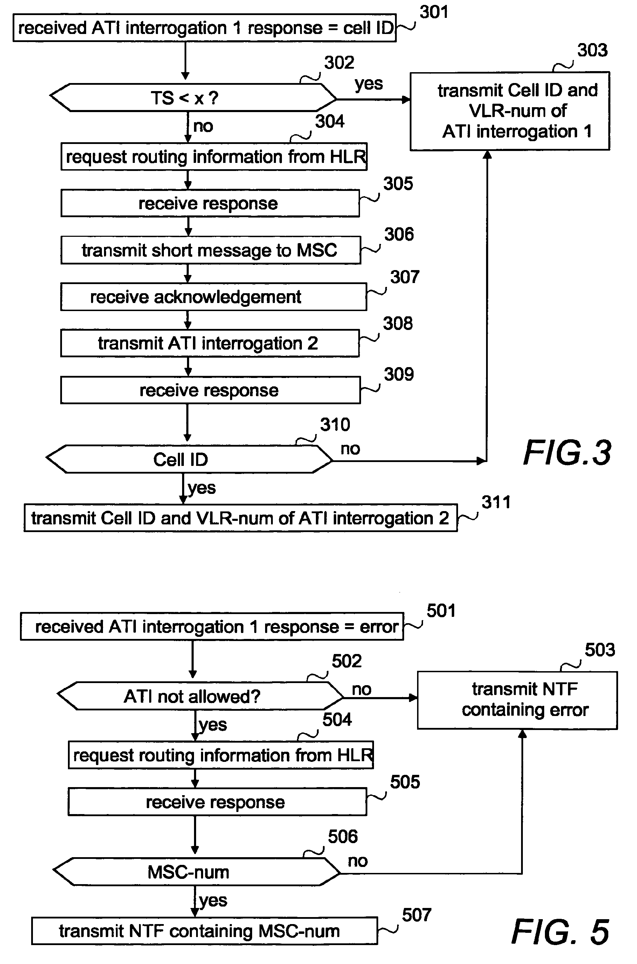

The operation of a positioning part according to the first preferred embodiment of the invention is illustrated in Figures 2, 3, 4 and 5. Figure 2 shows the basic principle of the operation, Figure 3 shows in detail a first timing procedure, Figure 4 shows a second timing procedure, and Figure 5 shows an error analysis. It is for the sake of clarity assumed in the timing procedures of Figures 3 and 4 that no error information is received from the network. In the first preferred embodiment, it is assumed that a service request relating to positioning, i.e. a positioning request, is always delivered to a service platform which asks the positioning part to locate a mobile station. A positioning request may be issued e.g. by the mobile station to be located, in which case the positioning request typically relates to a service to be provided based on location. A positioning request may also be issued by an application, such as a vehicle positioning application, which asks a mobile station attached to a vehicle to be located.

Referring to Figure 2, the positioning part receives a positioning request from the service platform at point 201. In the GSM system, a positioning request typically includes a mobile user's mobile station number MSISDN. In response to receiving the positioning request, at point 202 the positioning part transmits a positioning request according to the ATI function, i.e. an ATI interrogation 1, to the home location register containing subscriber information on the mobile station. The positioning request may be e.g. a "Positioning Request" or an "Any Time Interrogation" message. The address of the home location register is obtained by deriving it from the mobile station number e.g. according to the prior art. In the GSM system, an SCCP protocol is used for routing signalling, a positioning request being directed to a correct home location register by means of a Global Title (GT) of the SCCP protocol. In the first preferred embodiment of the invention, the home location register that received the ATI interrogation finds out, according to the prior art, utilizing the visitor location register of the mobile station, the location of the mobile station e.g. by transmitting a "Positioning Request" message according to the MAPv3 protocol or a "Provide Subscriber Info" message supported by even earlier MAP protocols. In the first preferred embodiment, it is assumed that the visitor location register, as a response to the interrogation issued by the home location register, returns information on the location of the mobile station with an accuracy either of a location area or a cell, as well as a time stamp TS to enable the time passed since the last radio connection to be estimated. In other words, in the first preferred embodiment, the response of the visitor location register, as location information, contains either the cell identity Cell ID of the cell wherein the mobile station resides, or the location area code LAC of the mobile station. Instead of the location area code of the mobile station, the response may contain the identifier of the location area of the mobile station. The identifier anyway typically contains the location area code. The response typically contains a cell identity Cell ID when the mobile station has an active radio connection to the network. In some other embodiment, the response may contain the location coordinates of the mobile station. In connection with the present description, location coordinates designate the location of a mobile station with an accuracy of at least a cell and, in Figures 2, 3, 4 and 5, receiving such coordinates means receiving a cell identity. If the response contains no location information, it contains information about an error, e.g. as an error code. To the positioning part, the home location register delivers either the received location information and the number VLR-num of the visitor location register serving the mobile station (or of the visitor location register that last served it), or the error.

At point 203, the positioning part receives a response to the ATI interrogation 1 from the home location register. After receiving the response, at point 204, the positioning part checks whether or not the response contained an error. If so, at point 205, the positioning part carries out an error analysis and transmits a response to the service platform. Point 205 will be described in closer detail in connection with Figure 5.

If the response contained no error (point 204), at point 206 the positioning part checks whether or not the response contained a cell identity Cell ID. If the response contained no cell identity either, it did contain the location area code, and at point 207, the positioning part executes a second timing 2 and transmits a response to the service platform. Point 207 will be described in closer detail in connection with Figure 4.

If the response contained a cell identity Cell ID (point 206), at point 208 the positioning part executes a first timing 1 and transmits a response to the service platform.

Figure 3 describes, in closer detail, steps of point 208 in Figure 2, i.e. the first timing and the information which is transmitted to the service platform on the basis of the first timing. In other words, the process in Figure 3 starts when a response to the first ATI interrogation 1 was received, which contained a cell identity Cell ID and a visitor location register number VLR-num (point 301). The first timing starts when, at point 302, it is checked whether or not the time stamp TS included in the response is smaller than a predetermined time limit X. A time stamp is a value which indicates the time that has passed since the last radio connection. For example, a value 0 may mean that the radio connection was active when the location information was asked for, and a value 1 that one minute, at most, had passed since the last radio connection when the location information was asked for.

If the time stamp TS is smaller than X (point 302), at point 303 the positioning part transmits the visitor location number VLR-num in the ATI interrogation 1 response and the cell identity Cell ID to the service platform.

If the time stamp TS was not smaller than X (point 302), the location information is so old that the current location of the mobile station is to be checked; therefore, at point 304, the positioning part requests routing information from the home location register of the mobile station. In the example of Figure 3, at point 305 the positioning part receives, as a response to its routing request, the number MSC-num of the mobile services switching centre serving the mobile station (or of the mobile services switching centre that last served it). It is usually the same as the visitor location register number VLR-num. (The response could include information about an error, in which case e.g. the visitor location register number VLR-num in the ATI interrogation 1 response, the cell identity Cell ID and the time stamp TS could be transmitted to the service platform).

After receiving the number MSC-num of the mobile services switching centre, at point 306 the positioning part transmits a short message to the mobile station, utilizing the number of the mobile services switching centre. The short message enables an active radio connection to be set up from the network to the mobile station, thus finding out the cell where the mobile station resides, provided that the mobile station has registered into the network and does not reside in a shadow area. At point 306, the short message to be transmitted is preferably invisible to the receiver, and a "normal" short message, i.e. a message based on one short message only.

At point 307, an acknowledgement is received concerning the delivery of the short message; in the example of Figure 3, the acknowledgement is assumed to be a notification indicating that the short message was delivered successfully.

After receiving the acknowledgement, at point 308 the positioning part transmits a positioning request according to the ATI function, i.e. an ATI interrogation 2, to the home location register containing subscriber information on the mobile station. In accordance with what has been disclosed above, the home location register, utilizing the visitor location register, finds out the location information on the mobile station for the update of which location information the short message was transmitted at point 307. At point 309, the positioning part receives a response to the ATI interrogation 2 from the home location register. At point 310, it is checked whether or not the response contained the cell identity Cell ID of the cell where the mobile station resides. If so, at point 311 the positioning part transmits the visitor location register number VLR-num in the ATI interrogation 2 response and the cell identity Cell ID to the service platform. If the response contained no cell identity Cell ID (point 310), at point 303 the positioning part transmits the visitor location register number VLR-num in the ATI interrogation 1 response and the cell identity Cell ID to the service platform.

The first timing thus enables a sufficiently "fresh" location, and not e.g. the location ten minutes ago, to be delivered as the location information on the mobile station when more recent location information is obtained by means of timing.

Figure 4 shows, in closer detail, steps of point 207 of Figure 2, i.e. the second timing and the information transmitted to the platform on the basis of the second timing. In other words, the process in Figure 4 starts when a response was received to the first ATI interrogation 1, which contained the location area code LAC and the visitor location register number VLR-num (point 401). The second timing starts when the positioning part, at point 402, requests routing information from the home location register of the mobile station. In the example of Figure 4, it is for the sake of clarity assumed that at point 403 the positioning part receives, as a response to its routing request, the number MSC-num of the mobile services switching centre serving the mobile station (or of the mobile services switching centre that last served it). (The response could have contained information about an error, in which case e.g. the visitor location register number VLR-num in the ATI interrogation 1 response and the location area code LAC could be transmitted to the service platform).

At point 404, the positioning part transmits a short message to the mobile station, utilizing the number of the mobile services switching centre. The short message to be transmitted at point 404 is preferably a short message invisible to the receiver, indicating that further short messages will follow. In other words, the short message has an MMS (More Messages to Send) flag on. As a result, the radio connection remains active, waiting for these new short messages; therefore, the mobile station can be located in a more reliable manner than when using a "normal" short message.

At point 405, an acknowledgement is received concerning the delivery of the short message; in the example of Figure 4, the acknowledgement indicates that the short message was delivered successfully. At point 406, the positioning part thus transmits a positioning request according to the ATI function, i.e. an ATI interrogation 2, to the home location register containing subscriber information on the mobile station. In accordance with what has been described in connection with Figure 2, the home location register, utilizing the visitor location register, finds out the location information on the mobile station for the update of which location information the short message was transmitted at point 404. At point 407, the positioning part receives a response to the ATI interrogation 2 from the home location register and, at point 408, via the mobile services switching centre, transmits information to the mobile station indicating that no new short messages are to be included into the same message by transmitting e.g. an "abort MMS" message. At point 409, the positioning part checks whether or not the response contained the cell identity Cell ID of the cell where the mobile station resides. If so, at point 410 the positioning part transmits the visitor location register number VLR-num in the ATI interrogation 2 response and the cell identity Cell ID to the service platform.

If the response contains no cell identity (point 409), it is checked at point 411 whether or not the response contained the location area code LAC. If so, at point 412 the positioning part transmits the visitor location register number VLR-num in the ATI interrogation 2 response and the location area code LAC to the service platform.

If the response contained no location area code LAC either (point 411), at point 413 the positioning part transmits the visitor location register number VLR-num in the ATI interrogation 1 response and the location area code LAC to the service platform

Although the example of Figures 3 and 4 use a short message for finding out more recent or more accurate location information, it is obvious to one skilled in the art that the way in which the more recent/more accurate location information is found out is irrelevant to the invention. Instead of short messages, another technique, such as solutions based on an IP technique, can be used.

Figure 5 describes, in closer detail, steps of point 205 of Figure 2, i.e. an error analysis and the information to be transmitted to the service platform on the basis of the error analysis. In other words, in Figure 5 the process starts when a response containing an error was received to the first ATI interrogation 1 (point 501). The error analysis starts when the positioning part, at point 502, checks whether or not the error was the fact that ATI was not allowed. ATI is not allowed e.g. when providing a network with ATI is prohibited or when the location network does not support CAMEL. If ATI is not allowed, at point 503 the positioning part transmits an error notification "Network Failure Exception" containing information about the error to the service platform.

If the error was not "ATI not allowed" (point 502), at point 504 the positioning part requests routing information from the home location register of the mobile station. At point 505, the positioning part receives a response to its routing request and, at point 506, checks whether or not the response contained the number MSC-num of the mobile services switching centre serving the mobile station (or of the mobile services switching centre that last served it). If the response did not contain the number of the mobile services switching centre, it contained information about en error, and an error notification "Network Failure Exception" containing the information on the error contained in the response is transmitted to the service platform at point 503. If the response did contain the number of the mobile services switching centre, an error notification "Network Failure Exception" containing the number MSC-num of the mobile services switching centre contained in the response is transmitted to the service platform at point 507. This enables the delivery of information indicating at least the operator in whose network or the country in which the subscriber resides.

Figure 6 illustrates the operation of a service platform according to the first preferred embodiment of the invention. In the example of Figure 6, a set of conditions according to which the service platform filters its data is, for the sake clarity, extremely simplified, and it is only intended to illustrate the filtering in accordance with the set of conditions. In the set of conditions of the example in Figure 6, it is assumed that the location of a person residing in Finland only is not to be forwarded. It is obvious to one skilled in the art that corresponding conditions also exist in other countries and that the set of conditions may be a set comprising even a large number of conditions. In the example of Figure 6, no stand is taken on the form in which the location information is provided and whether or not it has to be converted into coordinates, for example, but, for the sake of clarity, it is assumed that the location information is delivered as such.

In Figure 6, the process starts when at point 601 location information containing a VLR number is received. Utilizing the VLR number, it is checked at point 602 whether or not the mobile station to be located resides in Finland. On the basis of the VLR number, the location country and the operator can be found out. If the mobile station to be located resides in Finland, it is checked at point 603 whether the mobile station locates a person or something else. This can be checked e.g. utilizing information maintained in the home location register, the application that requested the positioning information from the service platform could have added information to its request about the type of the subscriber of the mobile station being located, or the number of the mobile station to be located in itself may indicate the type of the subscriber. If the mobile station locates a person (point 603), at point 604 it is checked whether or not the application requesting the positioning is authorized to access the location information. Which application is authorized to access location information may be determined e.g. in the service platform. In Finland, location information associated with a person can be delivered e.g. to emergency exchanges, fire and rescue departments or to the police. If the application is authorized to access location information, it is delivered to the application at point 605. If the application is not authorized to access the location information, it is not given to the application but, at point 606, information is transmitted about the fact that the information is inaccessible or that it is forbidden to give the location information. A message "could not locate the requested MS", for example, can be transmitted to the application.

If the mobile station resides somewhere else than in Finland (point 602), the location information on the mobile station is delivered to it at point 605.

In the example of Figure 6, a first condition checks the location country (Finland or another country), and then, depending on the location country, additional conditions are checked. In the example of Figure 6, several conditions are determined for the location country Finland, which need to be checked before delivering the location in formation. In other words, the condition/set of conditions associated with the location network of the mobile station are used for controlling which kind of location information is delivered to the final application, i.e. at which accuracy the location can be given. It is obvious to one skilled in the art that the sets of conditions can be provided according to operators, countries, regions, etc., just as the operator desires. The sets of conditions enable e.g. the legislation of the location country of the mobile station to be taken into account: in Finland, it is allowed to disclose where a vehicle resides, in Russia it is also allowed to disclose where a driver resides. When the condition/set of conditions has been determined in the service platform, it does not need to be determined separately for each application. It is thus easier to keep the information up-to-date.

The points set forth above in connection with Figures 2, 3, 4, 5 and 6 are not given in an absolute chronological order, and some points can be executed simultaneously or in a different order than the shown one. Other functions may also be executed between the points. Some points may also be omitted. In Figure 2, for example, in some embodiments, a response can be directly forwarded without analysing it in any closer detail, in other words points 204 to 208 can be replaced by a point wherein a response is transmitted to the service platform. In some other embodiment, the timing 1 can be omitted and directly forward the cell identity Cell ID. Similarly, the error analysis or timing 2 can be omitted.

The above-disclosed functionality requires that the home network and the location network of the mobile station to be located in solutions based on the GSM system support the CAMEL service (at least the CAMEL phase 1 support), and that the ATI function is activated in the home network. In solutions based on other systems, the networks must support features by means of which the corresponding information necessitated by the invention is obtained. To be more precise, they must support the delivery of location information between different networks. Usually positioning services further require that the system comprises a database which enables a cell identity to be converted into coordinates.

Although the invention has been described above assuming that the home location register, by means of which the location of a mobile station in a system is found out, finds out the location utilizing the visitor location register of the system, it is obvious to one skilled in the art how the invention is implemented in solutions wherein already the home location register is provided with corresponding information on the location of the mobile station, or wherein the home location register asks the visitor location register to transmit the location information directly to the positioning part or wherein the positioning part receives, from the home location register, the address of the visitor location register and itself requests the location information on the mobile station from the visitor location register.

The telecommunication system implementing the functionality of the present invention comprises, in addition to the equipment necessary for implementing prior art services, means for implementing the positioning functionality as described above. Existing network nodes comprise processors and memory that can be utilized for the functions of the invention. All changes necessary for implementing the invention can be carried out as routines that can be implemented as added or updated software routines, or included in application circuits (ASIC) and/or programmable circuits, such as EPLD (Electrically Programmable Logic Device) or FPGA (Field Programmable Gate Array).

It is obvious to one skilled in the art that as technology advances, the basic idea of the invention can be implemented in many different ways. The invention and its embodiments are thus not restricted to the above-described examples but may vary within the scope of the claims.

## Claims

1. A method for positioning a wireless terminal in a telecommunication system comprising a home network of the wireless terminal, at least one visited network within whose area the terminal may roam, at least one positioning part for locating the wireless terminal residing within the area of the telecommunication system, and a home location register comprising routing information on the wireless terminal, the routing information enabling the location of the wireless terminal to be found out, the method comprising at least the following steps:
receiving (201), at the positioning part, a positioning request concerning the wireless terminal;
finding out (202) first location information on the wireless terminal in response to receiving the positioning request, irrespective of whether the wireless terminal resides within the area of its home network or within the area of the visited network, the first location information indicating the location network of the wireless terminal;
**characterized by**
maintaining at least one condition by means of which it is checked, based on the location network of the wireless terminal, whether or not the location information on the wireless terminal is allowed to be forwarded from a service platform which delivered the positioning request; and
if the location information on the wireless terminal is allowed to be forwarded, the method further comprises the steps of:
- checking (206) whether or not the location information indicates the location of the wireless terminal with an accuracy of at least a cell; and
- if not, re-finding out the location of the wireless terminal with an accuracy of a cell.

2. A method as claimed in claim 1, **characterized in that** the step of finding out comprises, at the positioning part, at least the following step of requesting (202) the first location information on the wireless terminal from the home location register.

3. A method as claimed in claim 1 or 2, **characterized in that** if the location information indicates the location of the wireless terminal with an accuracy of at least a cell, the step of finding out comprises, at the positioning part, at least the following steps:
checking (302) whether or not the age of the location information is below a predetermined time limit and if the age of the location information exceeds the predetermined time limit, the location of the wireless terminal is found out (304 to 312) again.

4. A method as claimed in claim 3, **characterized in that** finding out the location again in response to the age exceeding the predetermined time limit comprises at least the following steps:
requesting (304) routing information on the wireless terminal from the home location register;
receiving (305) the routing information;
transmitting (307), using the routing information, a short message to the wireless terminal;
in response to an acknowledgement of the short message, requesting (310) again the location information on the wireless terminal from the home location register.

5. A method as claimed in claim 1, 2, 3 or 4, **characterized in that** if the location information indicates the location of the wireless terminal with an accuracy of a location area, the re-finding out the location of the wireless terminal further comprises the following steps:
requesting (402) routing information on the wireless terminal from the home location register;
receiving (403) the routing information;
transmitting (406), using the routing information, a short message to the wireless terminal;
in response to an acknowledgement of the short message, requesting (409) again the location information on the wireless terminal from the home location register.

6. A method as claimed in claim 1, 2, 3, 4 or 5, **characterized in that** if the location information contains an error notification, the method further comprises the following steps:
checking (502) whether or not the error indicates that finding out the location is not allowed; if so, the method further comprises the following steps:
requesting (504) routing information on the wireless terminal from the home location register;
receiving (505) the routing information; and
if the routing information contained the number of the network node serving the wireless terminal, an error notification containing the number of the network node serving the wireless terminal is returned (507) as a response to the positioning part.

7. A method as claimed in any one of the preceding claims, **characterized by** forwarding the location information with an accuracy allowed by a set of conditions.

8. A telecommunication system (1) comprising
at least one wireless terminal (MS),
a home network (3) for the wireless terminal,
a home location register (HLR) in the home network, comprising routing information on the wireless terminal, the routing information enabling the location of the wireless terminal to be found out, and
at least one visited network (2) in whose area the wireless terminal may roam,
at least one positioning part (PO) for locating the wireless terminal by means of the home location register, irrespective of whether the wireless terminal resides within the area of its home network or within the area of the visited network,
**characterized in that** the system further comprises
at least one service platform, which delivers a positioning request concerning the wireless terminal to the positioning part and which comprises at least one condition on the basis of which the service platform checks, based on a location network of the wireless terminal indicated by the location information received from the positioning part, whether or not it is allowed to forward the location information received from the positioning part, and
at least one routine for checking, whether or not the location information indicates the location of the wireless terminal with an accuracy of at least a cell and for re-finding out the location of the wireless terminal with an accuracy of a cell.

9. A telecommunication system (1) as claimed in claim 8, **char-acterized** in that the positioning part (PO) and the home location register (HLR) both comprise an interface supporting an ATI, Any Time Interrogation, function for transmitting information between the home location register and the positioning part.

10. A telecommunication system (1) as claimed in claim 8 or 9, **characterized in that** it comprises only one positioning part (PO).

11. A telecommunication system as claimed in claim 8, 9 or 10, **characterized in that** the condition relates to regulations concerning the delivery of location information in a country where the terminal resides.

12. A telecommunication system (1) as claimed in claim 8, 9, 10 or 11, **characterized in that** it (1) is a mobile communication system and the wireless terminal (MS) is a mobile station.

13. A network node (SPS) in a telecommunication system comprising a wireless terminal, its home network, at least one visited network in whose area the wireless terminal may roam, the network node (SPS) being configured to find out, utilizing the received location information on the wireless terminal, the location of the wireless terminal irrespective of whether the wireless terminal resides within the area of its home network or within the area of the visited network,
**characterized in that**
the network node comprises a service platform, which comprises at least one condition on the basis of which the service platform checks, based on a location network of the wireless terminal indicated by the location information received from a positioning part, whether or not it is allowed to forward the location information received, and
the network node is configured to forward, only in response to the forwarding being allowed, the location information with an accuracy allowed by a further condition relating to the location network.

14. A network node as claimed in claim 13, **characterized in that** the network node comprises the positioning part for locating the wireless terminal by means of a home location register comprising routing information on the wireless terminal, and the network node is further configured to check, whether or not the location information indicates the location of the wireless terminal with an accuracy of at least a cell and to re-find out the location of the wireless terminal with an accuracy of a cell.

15. A network node (HSP) as claimed in claim 14, **characterized in that** the positioning part of the network node is configured to check the age of the location information and, in response to the age exceeding a predetermined age limit, to ask the home location register to locate again the wireless terminal.

## Patentansprüche

1. Verfahren zur Ortsbestimmung eines drahtlosen Endgeräts in einem Telekommunikationssystem mit einem Heimnetz des drahtlosen Endgeräts, zumindest einem besuchten Netz, in dessen Bereich das Endgerät roamen kann, zumindest einem Ortsbestimmungsteil zur Ortung des drahtlosen Endgeräts, das sich im Bereich des Telekommunikationssystems befindet, und einem Heimatverzeichnis, das Routing-Information über das drahtlose Endgerät umfasst, welche Routing-Information die Entdeckung des Standorts des drahtlosen Endgeräts ermöglicht, wobei das Verfahren zumindest die folgenden Schritte aufweist:
Empfangen (201) einer das drahtlose Endgerät betreffenden Ortsbestimmungsabfrage am Ortsbestimmungsteil;
Entdecken (202) erster Ortsinformation über das drahtlose Endgerät als Reaktion auf das Empfangen der Ortsbestimmungsabfrage, ungeachtet dessen, ob sich das drahtlose Endgerät im Bereich seines Heimnetzes oder im Bereich des besuchten Netzes befindet, welche erste Ortsinformation das Standortnetz des drahtlosen Endgeräts anzeigt;
**dadurch gekennzeichnet, dass**
zumindest eine Bedingung aufrechterhalten wird, mittels deren aufgrund des Standortnetzes des drahtlosen Endgeräts überprüft wird, ob die Ortsinformation über das drahtlose Endgerät von einer Dienstplattform, die die Ortsbestimmungsabfrage lieferte, weitergeleitet werden darf; und
falls die Ortsinformation über das drahtlose Endgerät weitergeleitet werden darf, das Verfahren weiterhin die Schritte aufweist, in denen:
- überprüft wird (206), ob die Ortsinformation den Standort des drahtlosen Endgeräts mit einer Genauigkeit von zumindest einer Zelle anzeigt; und
- falls nicht, der Standort des drahtlosen Endgeräts mit einer Genauigkeit von einer Zelle wiederentdeckt wird.

2. Verfahren nach Anspruch 1, **dadurch gekennzeichnet, dass** der Schritt des Entdeckens am Ortsbestimmungsteil zumindest den folgenden Schritt aufweist, in dem die erste Ortsinformation über das drahtlose Endgerät vom Heimatverzeichnis abgefragt wird (202).

3. Verfahren nach Anspruch 1 oder 2, **dadurch gekennzeichnet, dass**, falls die Ortsinformation den Standort des drahtlosen Endgeräts mit einer Genauigkeit von zumindest einer Zelle anzeigt, der Schritt des Entdeckens am Ortsbestimmungsteil zumindest die folgenden Schritte aufweist:
Überprüfen (302), ob das Alter der Ortsinformation unter einer vorbestimmten Zeitgrenze ist, und falls das Alter der Ortsinformation die vorbestimmte Zeitgrenze überschreitet, wird der Standort des drahtlosen Endgeräts wieder entdeckt (304 bis 312).

4. Verfahren nach Anspruch 3, **dadurch gekennzeichnet, dass** das Wiederentdecken des Standorts als Reaktion darauf, dass das Alter die vorbestimmte Zeitgrenze überschreitet, zumindest die folgenden Schritte aufweist:
Abfragen (304) von Routing-Information über das drahtlose Endgerät vom Heimatverzeichnis;
Empfangen (305) der Routing-Information;
Übertragen (307) einer Kurznachricht zum drahtlosen Endgerät unter Verwendung der Routing-Information,
als Reaktion auf eine Bestätigung der Kurznachricht Wiederabfragen (310) der Ortsinformation über das drahtlose Endgerät vom Heimatverzeichnis.

5. Verfahren nach Anspruch 1, 2, 3 oder 4, **dadurch gekennzeichnet, dass**, falls die Ortsinformation den Standort des drahtlosen Endgeräts mit einer Genauigkeit von einem Standortbereich anzeigt, das Wiederentdecken des Standorts des drahtlosen Endgeräts weiterhin die folgenden Schritte aufweist:
Abfragen (402) von Routing-Information über das drahtlose Endgerät vom Heimatverzeichnis;
Empfangen (403) der Routing-Information;
Übertragen (406) einer Kurznachricht zum drahtlosen Endgerät unter Verwendung der Routing-Information,
als Reaktion auf eine Bestätigung der Kurznachricht Wiederabfragen (409) der Ortsinformation über das drahtlose Endgerät vom Heimatverzeichnis.

6. Verfahren nach Anspruch 1, 2, 3, 4 oder 5, **dadurch gekennzeichnet, dass**, falls die Ortsinformation eine Fehlermeldung enthält, das Verfahren weiterhin die folgenden Schritte aufweist:
Überprüfen (502), ob der Fehler anzeigt, dass die Entdeckung des Standorts nicht erlaubt ist; falls ja, weist das Verfahren weiterhin die folgenden Schritte auf:
Abfragen (504) von Routing-Information über das drahtlose Endgerät vom Heimatverzeichnis;
Empfangen (505) der Routing-Information; und
falls die Routing-Information die Nummer des das drahtlose Endgerät dienenden Netzknotens enthielt, wird eine die Nummer des das drahtlose Endgerät dienenden Netzknotens enthaltende Fehlermeldung als Reaktion an den Ortsbestimmungsteil zurückgesendet (507).

7. Verfahren nach einem der vorhergehenden Ansprüche, **dadurch gekennzeichnet, dass** die Ortsinformation mit einer Genauigkeit weitergeleitet wird, die von einer Reihe von Bedingungen erlaubt ist.

8. Telekommunikationssystem (1) mit:
zumindest einem drahtlosen Endgerät (MS),
einem Heimnetz (3) für das drahtlose Endgerät,
einem Heimatverzeichnis (HLR) im Heimnetz, das Routing-Information über das drahtlose Endgerät umfasst, welche Routing-Information die Entdeckung des Standorts des drahtlosen Endgeräts ermöglicht, und
zumindest einem besuchten Netz (2), in dessen Bereich das Endgerät roamen kann,
zumindest einem Ortsbestimmungsteil (PO) zur Ortung des drahtlosen Endgeräts anhand des Heimatverzeichnisses, ungeachtet dessen, ob sich das drahtlose Endgerät im Bereich seines Heimnetzes oder im Bereich des besuchten Netzes befindet,
**dadurch gekennzeichnet, dass** das System weiterhin aufweist:
zumindest eine Dienstplattform, die eine das drahtlose Endgerät betreffende Ortsbestimmungsabfrage dem Ortsbestimmungsteil liefert und die zumindest eine Bedingung umfasst, aufgrund deren die Dienstplattform, basierend auf einem durch die vom Ortsbestimmungsteil empfangene Ortsinformation angezeigten Standortnetz des drahtlosen Endgeräts, überprüft, ob die vom Ortsbestimmungsteil empfangene Ortsinformation weitergeleitet werden darf, und
zumindest eine Routine zur Überprüfung, ob die Ortsinformation den Standort des drahtlosen Endgeräts mit einer Genauigkeit von zumindest einer Zelle anzeigt, und zur Wiederentdeckung des Standorts des drahtlosen Endgeräts mit einer Genauigkeit von einer Zelle.

9. Telekommunikationssystem (1) nach Anspruch 8, **dadurch gekennzeichnet, dass** sowohl der Ortsbestimmungsteil (PO) als auch das Heimatverzeichnis (HLR) eine Schnittstelle aufweisen, die eine ATI-Funktion (Any Time Interrogation) für die Übertragung von Information zwischen dem Heimatverzeichnis und dem Ortsbestimmungsteil unterstützt.

10. Telekommunikationssystem (1) nach Anspruch 8 oder 9, **dadurch gekennzeichnet, dass** es nur einen Ortsbestimmungsteil (PO) aufweist.

11. Telekommunikationssystem nach Anspruch 8, 9 oder 10, **dadurch gekennzeichnet, dass** sich die Bedingung auf Vorschriften bezieht, die die Lieferung von Ortsinformation in dem Land, wo sich das Endgerät befindet, betreffen.

12. Telekommunikationssystem (1) nach Anspruch 8, 9, 10 oder 11, **dadurch gekennzeichnet, dass** es (1) ein Mobilkommunikationssystem ist und das drahtlose Endgerät (MS) eine Mobilstation ist.

13. Netzknoten (SPS) in einem Telekommunikationssystem mit einem drahtlosen Endgerät, seinem Heimnetz, zumindest einem besuchten Netz, in dessen Bereich das drahtlose Endgerät roamen kann, welcher Netzknoten (SPS) konfiguriert ist, unter Benutzung der empfangenen Ortsinformation über das drahtlose Endgerät den Standort des drahtlosen Endgeräts zu entdecken, ungeachtet dessen, ob sich das drahtlose Endgerät im Bereich seines Heimnetzes oder im Bereich des besuchten Netzes befindet,
**dadurch gekennzeichnet, dass**
der Netzknoten eine Dienstplattform aufweist, die zumindest eine Bedingung umfasst, aufgrund deren die Dienstplattform, basierend auf einem durch die von einem Ortsbestimmungsteil empfangene Ortsinformation angezeigten Standortnetz des drahtlosen Endgeräts, überprüft, ob die empfangene Ortsinformation weitergeleitet werden darf, und
der Netzknoten konfiguriert ist, nur als Reaktion auf eine erlaubte Weiterleitung die Ortsinformation mit einer Genauigkeit weiterzuleiten, die von einer weiteren, sich auf das Standortnetz beziehenden Bedingung erlaubt ist.

14. Netzknoten nach Anspruch 13, **dadurch gekennzeichnet, dass** der Netzknoten den Ortsbestimmungsteil zur Ortung des drahtlosen Endgeräts anhand eines Heimatverzeichnisses aufweist, das Routing-Information über das drahtlose Endgerät aufweist, und der Netzknoten weiterhin konfiguriert ist, zu überprüfen, ob die Ortsinformation den Standort des drahtlosen Endgeräts mit einer Genauigkeit von zumindest einer Zelle anzeigt, und den Standort des drahtlosen Endgeräts mit einer Genauigkeit von einer Zelle wieder zu entdecken.

15. Netzknoten (HSP) nach Anspruch 14, **dadurch gekennzeichnet, dass** der Ortsbestimmungsteil des Netzknotens konfiguriert ist, das Alter der Ortsinformation zu überprüfen, und als Reaktion darauf, dass das Alter eine vorbestimmte Zeitgrenze überschreitet, das Heimatverzeichnis zu bitten, das drahtlose Endgerät wieder zu orten.

## Revendications

1. Procédé de localisation d'un terminal sans fil dans un système de télécommunication comprenant un réseau domestique du terminal sans fil, au moins un réseau visité dans la zone duquel le terminal peut se déplacer, au moins une partie de localisation pour détecter l'emplacement du terminal sans fil à l'intérieur de la zone du système de télécommunication, et un enregistreur de localisation nominal comprenant des informations de routage du terminal sans fil, les informations de routage permettant la localisation du terminal sans fil à rechercher, le procédé comprenant au moins les étapes suivantes :
la réception (201), au niveau de la partie de localisation, d'une demande de localisation concernant le terminal sans fil ;
la recherche (202) des premières informations de localisation du terminal sans fil en réponse à la réception d'une requête de localisation, indépendamment du fait que le terminal sans fil réside à l'intérieur de la zone de son réseau domestique ou à l'intérieur de la zone du réseau visité, les premières informations de localisation indiquant le réseau de localisation du terminal sans fil ;
**caractérisé par** :
le maintien d'au moins une condition au moyen de laquelle on vérifie, sur la base du réseau de localisation du terminal sans fil, si les informations de localisation du terminal sans fil sont autorisées ou pas à être transmises à partir d'une plate-forme de service qui a fourni la demande de localisation ; et
si les informations de localisation du terminal sans fil sont autorisées à être transmises, le procédé comprend en outre les étapes de :
- la vérification (206) si les informations de localisation indiquent ou pas la localisation du terminal sans fil avec une précision d'au moins une cellule ; et
- si tel n'est pas le cas, la nouvelle recherche de la localisation du terminal sans fil avec une précision d'une cellule.

2. Procédé selon la revendication 1, **caractérisé en ce que** l'étape de recherche comprend, au niveau de la partie de localisation, au moins l'étape suivante de la requête (202) des premières informations de localisation du terminal sans fil à partir de l'enregistreur de localisation nominal.

3. Procédé selon la revendication 1 ou 2, **caractérisé en ce que**, si les informations de localisation indiquent l'emplacement du terminal sans fil avec une précision d'au moins une cellule, l'étape de recherche comprend, au niveau de la partie de localisation, au moins les étapes suivantes :
la vérification (302) de si l'âge des informations de localisation se situe en dessous d'une limite de temps prédéterminée, et si l'âge des informations de localisation dépasse la limite de temps prédéterminée, la localisation du terminal sans fil est recherchée de nouveau (304 à 312).

4. Procédé selon la revendication 3, **caractérisé en ce que** la nouvelle recherche de la localisation en réponse au dépassement de la limite de temps prédéterminée de l'âge, comprend au moins les étapes suivantes :
la requête (304) des informations de routage du terminal sans fil à partir de l'enregistreur de localisation nominal ;
la réception (305) des informations de routage ;
la transmission (307), en utilisant les informations de routage, un message court vers le terminal sans fil ;
en réponse à un accusé de réception du message court, la nouvelle requête (310) des informations de localisation du terminal sans fil à partir de l'enregistreur de localisation nominal.

5. Procédé selon l'une des revendications 1, 2, 3 ou 4, **caractérisé en ce que**, si les informations de localisation indiquent l'emplacement du terminal sans fil avec une précision d'une zone de localisation, la nouvelle recherche de localisation du terminal sans fil comprend en outre les étapes suivantes :
la requête (402) des informations de routage du terminal sans fil à partir de l'enregistreur de localisation nominal ;
la réception (403) des informations de routage ;
la transmission (406), en utilisant les informations de routage, un message court vers le terminal sans fil ;
en réponse à un accusé de réception du message court, la nouvelle requête (409) des informations de localisation du terminal sans fil à partir de l'enregistreur de localisation nominal.

6. Procédé selon l'une des revendications 1, 2, 3, 4 ou 5, **caractérisé en ce que**, si les informations de localisation contiennent une notification d'erreur, le procédé comprend en outre les étapes suivantes :
la vérification (502) de si l'erreur indique ou pas que la recherche de localisation n'est pas permise ; si tel est le cas, le procédé comprend en outre les étapes suivantes :
la requête (504) des informations de routage du terminal sans fil à partir de l'enregistreur de localisation nominal ;
la réception (505) des informations de routage ; et
si les informations de routage contiennent le numéro du noeud de réseau desservant le terminal sans fil, une notification d'erreur contenant le numéro du noeud de réseau desservant le terminal sans fil, est retournée (507) en tant que réponse à la partie de localisation.

7. Procédé selon l'une des revendications précédentes, **caractérisé par** le transfert des informations de localisation avec une précision permise par un ensemble de conditions.

8. Système de télécommunication (1) comprenant :
au moins un terminal sans fil (MS) ;
un réseau domestique (3) du terminal sans fil ;
un enregistreur de localisation nominal (HLR) dans le réseau domestique, comprenant des informations de routage du terminal sans fil, les informations de routage permettant la localisation du terminal sans fil à rechercher ; et
au moins un réseau visité (2) dans la zone duquel le terminal sans fil peut se déplacer ;
au moins une partie de localisation (PO) pour la localisation du terminal sans fil au moyen de l'enregistreur de localisation nominal, indépendamment du fait que le terminal sans fil réside à l'intérieur de la zone de son réseau domestique ou à l'intérieur de la zone du réseau visité ;
**caractérisé en ce que** le système comprend en outre :
au moins une plate-forme de service, qui fournit une demande de localisation concernant le terminal sans fil à la partie de localisation et qui comprend au moins une condition sur la base de laquelle la plate-forme de service vérifie, sur la base d'un réseau de localisation du terminal sans fil indiqué par les informations de localisation reçues de la partie de localisation, s'il est possible ou pas de transférer les informations de localisation reçues de la partie de localisation ; et
au moins une routine pour la vérification, si les informations de localisation indiquent ou pas l'emplacement du terminal sans fil avec une précision d'au moins une cellule et la nouvelle recherche de la localisation du terminal sans fil avec une précision d'une cellule.

9. Système de télécommunication (1) selon la revendication 8, **caractérisé en ce que** la partie de localisation (PO) et l'enregistreur de localisation nominal (HLR) comprennent tous deux une interface qui supporte une fonction d'interrogation à tout moment, ATI, pour la transmission des informations entre l'enregistreur de localisation nominal et la partie de localisation.

10. Système de télécommunication (1) selon la revendication 8 ou la revendication 9, **caractérisé en ce qu'**il comprend seulement une partie de localisation (PO).

11. Système de télécommunication selon l'une des revendications 8, 9 ou 10, **caractérisé en ce que** la condition se rapporte à des réglementations concernant la diffusion d'informations de la localisation dans le pays où le terminal réside.

12. Système de télécommunication (1) selon l'une des revendications 8, 9, 10 ou 11, **caractérisé en ce que** le système (1) est un système de communication mobile et le terminal sans fil (MS) est une station mobile.

13. Noeud de réseau (SPS) dans un système de télécommunication comprenant un terminal sans fil, son réseau domestique, au moins un réseau visité dans la zone duquel le terminal sans fil peut se déplacer, le noeud de réseau (SPS) étant configuré pour rechercher, en utilisant les informations de localisation reçues du terminal sans fil, l'emplacement du terminal sans fil indépendamment du fait que le terminal sans fil se situe ou pas à l'intérieur de la zone de son réseau domestique ou à l'intérieur de la zone du réseau visité ;
**caractérisé en ce que** :
le noeud de réseau comprend une plate-forme de service, qui comprend au moins une condition sur la base de laquelle la plate-forme de service vérifie, sur la base d'un réseau de localisation du terminal sans fil indiqué par les informations de localisation reçues par une partie de localisation, s'il est autorisé ou pas à transmettre les informations de localisation reçues ; et
le noeud de réseau est configuré pour transmettre, seulement en réponse à une autorisation de transfert, les informations de localisation avec une précision permise par une autre condition en relation avec le réseau de localisation.

14. Noeud de réseau selon la revendication 13, **caractérisé en ce que** le noeud de réseau comprend la partie de localisation pour localiser le terminal sans fil au moyen d'un enregistreur de localisation nominal comprenant des informations de routage du terminal sans fil, et le noeud de réseau est configuré en outre pour vérifier, si les informations de localisation indiquent ou pas l'emplacement du terminal sans fil avec une précision d'au moins une cellule et à rechercher de nouveau la localisation du terminal sans fil avec une précision d'une cellule.

15. Noeud de réseau (HSP) selon la revendication 14, **caractérisé en ce que** la partie de localisation du noeud de réseau est configurée pour vérifier l'âge des informations de localisation et, en réponse à l'âge dépassant une limite d'âge prédéterminée, à demander à l'enregistreur de localisation nominal de localiser de nouveau le terminal sans fil.
